# EUROPEAN PATENT SPECIFICATION

(11) **EP 1 548 271 B1**
(45) Date of publication and mention of the grant of the patent: **21.04.2010**
(21) Application number: 03029638.8
(22) Date of filing: 22.12.2003
(51) Int. Cl.: F02M 55/00

(54) **A fuel system**
Ein Kraftstoffeinspritzsystem
Systeme d'injection de carburant

(43) Date of publication of application: 29.06.2005
(73) Proprietor: Continental Automotive GmbH, 30165 Hannover (DE)
(72) Inventor: Giorgetti, Edoardo, 57013 Rosignano Marittimo (LI) (IT); Ricci, Roberto, 57121 Livorno (IT); Viggiani, Domenico, 57123 Livorno (IT)

(56) References cited:
- DE-A- 10 026 277
- US-A- 4 295 452
- US-A- 5 169 182
- US-A- 5 499 612
- US-A- 5 513 613
- US-A- 5 724 946
- US-A- 6 102 007
- US-A1- 2001 050 073
- US-A1- 2002 130 205
- US-A1- 2003 011 193
- US-B1- 6 431 151

## Description

The invention relates to a component that is suitable for connecting to a further component and a connecting arrangement with a first and second component. A component of this kind or a connecting arrangement of this kind is particularly suitable for use in a fuel supply device of an internal combustion engine.

From WO 01/71179 A2, an injection valve for an internal combustion engine is known and the arrangement of the injection valve in a fuel feed device of an internal combustion engine. The injection valve has a connecting element that is fitted into a tubular recess of a connection of a fuel rail. The connecting element of the injection valve also has a tubular recess. The injection valve has a sealing ring that is arranged radially around the connecting element. Furthermore, a thread, a mating thread, a ring and a taper are provided that interact with each other in such a way that when the thread is screwed onto the mating thread the ring tensions the taper radially in the direction of the connecting element of the injection valve and thus fixes the connecting valve. To use this arrangement for fuel feed devices with very high pressures, such as for example occur in internal combustion engines with direct fuel injection, where pressures of 180 bar occur for gasoline and up to 2000 bar for diesel, the individual elements must be very precisely manufactured to guarantee a good seal. An arrangement of this kind is therefore extremely expensive for use at high fuel pressures.

US 6,102,007 discloses a fuel injection system which comprises a fuel distribution line which comprises a fitting for the insertion of a fuel injection valve. The fitting comprises a location hole that narrows into a cone shaped section. The injection valve is provided with an O-ring shaped sealing element in order to ensure a sealing connection between the injection valve and the fuel distribution line.

US 5,169,182 discloses a high pressure fuel rail including a passage through which high pressure fuel flows. The passage comprises a tapered recess, tapering radially outward from the passage. A branch element includes a press head, that is engaged with a bowl-shaped seal, placed between the press head and the tapered recess.

US 5,499,612 discloses a clamping assembly for an internal combustion engine. The clamping assembly is provided and adapted for each hydraulically actuated fuel injector positioned in a respective engine member. The clamping assembly includes a relatively rigid and non-linear external actuating fluid line such as seamless tubing, having a flared end portion. The flared end portion defines an annular internal sealing surface and an annular external abutment surface. The annular internal sealing surface of the fluid line is frustro-conically-shaped. In addition to that a sleeve is provided.

US2002130205 discloses a connecting arrangement for a fuel supply device of an internal combustion engine with two components, one comprising a tapered recess and the other one comprising a mushroom head shaped connecting element which mates into the tapered recess of the other element to form a sealed connection.

The object of the invention is to create a component that on the one hand is simple and on the other hand guarantees a reliable seal at high pressure in the component when connected to another component. It is furthermore the object of the invention to create a connecting arrangement with a first and second component, that on the one hand is simple and on the other hand guarantees a reliable seal between the first and second component with high pressure in the components.

This object is achieved with connecting arrangement having the features of Claim 1. Advantageous embodiments of the invention are given in the subclaims.

The invention is distinguished by a connecting arrangement for a fuel supply device of an internal combustion engine with a first and second component. The first component is connected to the second component. The first component comprises a body having a tapered recess at whose narrow end a tubular recess connects. The second component has a mushroom-head-shaped connecting element with another tubular recess. The mushroom-head-shaped connecting element is pressed with its hemispherical or half ellipse contour against the first component in the area of the tapered recess. The tapered recess is formed in an element consisting of a sealing material with a cylindrical outer contour, which is fixed to the body, the sealing material having hardness which is less than the hardness of the material of the mushroom-head-shaped connecting element of which the mushroom-head-shaped connecting element consists at least in the area of contact **which contacts** the sealing material, **when the mushroom-head-shaped connecting element** is pressed against the first component. In this way a very good seal, a simple assembly of the first component to the second component with at the same time less stress on the component due to push forces, is also guaranteed.

In an advantageous embodiment of the invention the sealing material is pressed onto the mushroom-head-shaped connecting element. This enables a ring to be used as the element, said ring being formed with the tapered recess, for example by a simple press forming process. Such rings are cheap and freely available.

In a further advantageous embodiment of the invention the element is arranged in a further cylindrical recess of the body, to which the tubular recess connects and which has a wider diameter than the tubular recess. This enables a simple press forming process being used for creating the tubular recess and at the same time fixing the element to the body.

In a further advantageous embodiment of the invention the element is brazed to the body, whereas the brazing material being located between the element and the body along at least part of the axial extension of the further recess. This ensures in a simple way, that a leakage of fluid through the space between the element and the body, even under very high pressures of a fluid flowing in the tubular recess is prevented. In that way the brazing material provides for a reliable sealing.

In a further advantageous embodiment of the invention the body has a protuberance or a respective cavity that is formed in a way that in cooperation with the element a form closure between the element and the component body is established. This ensures in a simple way, that the element is prevented from falling out of the body.

In a further advantageous embodiment of the invention the sealing material is aluminum or copper. The advantage of this is that the aluminum or copper materials have properties that make them particularly suitable for sealing purposes.

Exemplary embodiments of the invention are explained in the following with the aid of schematic drawings. These are as follows:
- Figure 1: an internal combustion engine with a fuel feed device,
- Figure 2: a first and second component,
- Figure 3: a connected arrangement with the first and second component,
- Figure 4A, 4B: manufacturing steps of the first embodiment of the first component,
- Figure 5A, 5B: manufacturing steps of a second embodiment of the first component and
- Figure 6A, 6B: manufacturing steps of a third embodiment of the first component.

Elements of the same design and function that occur in different illustrations are identified by the same reference character.

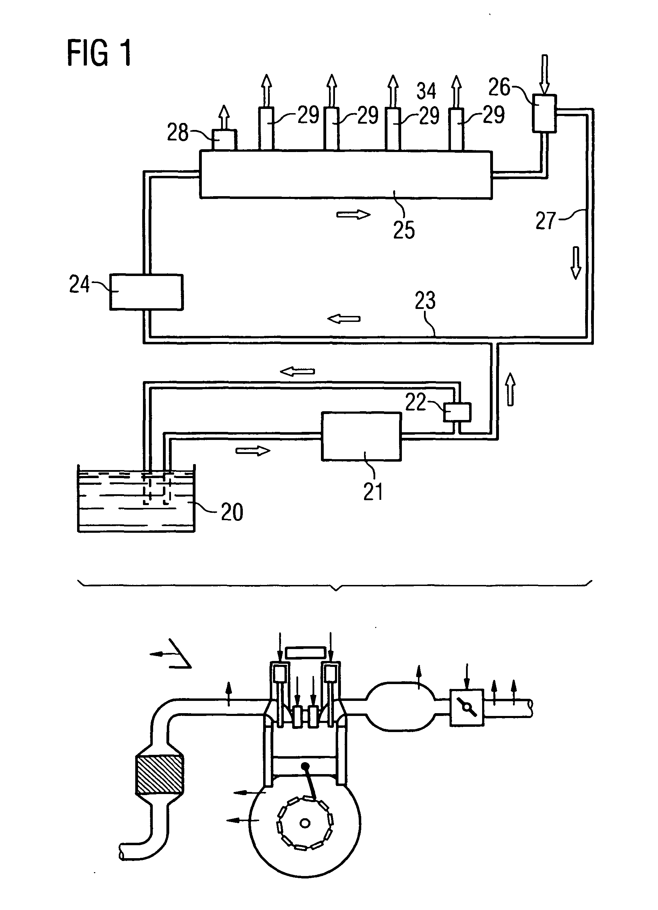

A fuel feed device is assigned to an internal combustion engine (Figure 1). The fuel feed device is designed for use in internal combustion engines with direct metering of the fuel to the cylinders of the internal combustion engine at high pressure, for example 200 bar. It includes a fuel tank 20, that is connected via a first fuel line to a low-pressure pump 21. At the output end, the low-pressure pump 21 is connected to an inlet 23, of a high-pressure pump 24. Furthermore, at the outlet of the low-pressure pump 21, a mechanical regulator 22 is provided, the output of which is actively connected via a further fuel line to the fuel tank 20. The inlet 23 is connected to the high-pressure pump 24 that at its output end pumps fuel to the fuel accumulator 25. The high-pressure pump 24 is usually driven by the crankshaft or camshaft of the internal combustion engine and thus at a constant speed of the crankshaft delivers a constant fuel volume to the fuel accumulator 25.

Injection valves 29 are actively connected to the fuel accumulator 25. The fuel is thus fed to the injection valves 29 via the fuel accumulator 25. The injection valves 29 have a sealed connection to the fuel accumulator 25.

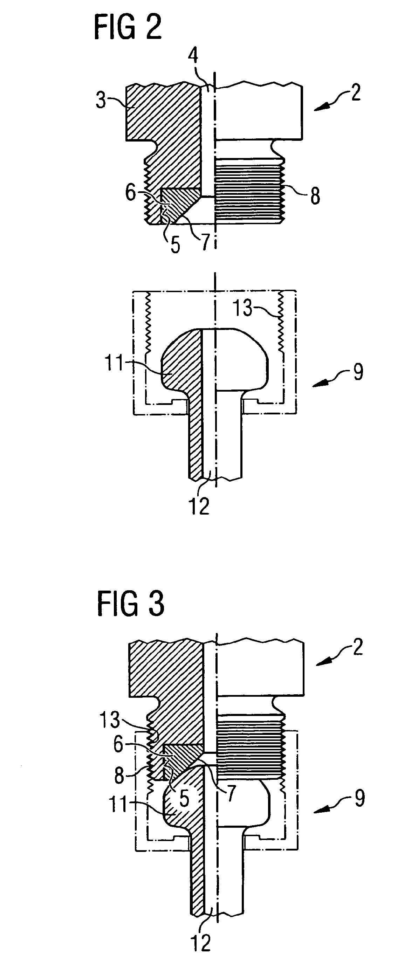

Figure 2 shows a first component 2 and a second component 9. The first component 2 can, for example, be part of the fuel accumulator 25. The second component 9 can, for example, be an injection valve 29.

The first component 2 comprises a body 3 in which a tubular recess 4 is formed, which is suitable for the passage of fluid, in particular fuel and which is advantageously designed so that it forms a connection to a fuel volume in the fuel accumulator 25. In the body 3 a further cylindrical recess 5 is formed with a greater diameter than the tubular recess 4. It is preferably formed coaxially to the tubular recess 4 facing towards the end of the body 3, that is designated to face the second component 9. An element with a cylindrical outer contour is taken in the further cylindrical recess 5. A tapered recess 7 is formed in the element 6, which connects to the tubular recess 4. The element 6 is fixed to the body 3.

In an alternative embodiment the element 6 may be fixed to the end facing towards the second component 9 of the body 3 without there being a further cylindrical recess 5. It may then be fixed to the body 3 for example by welding.

The first component 2 further comprises a thread which is designated to match to a mating thread 13, which is formed in the second component 9. The second component 9 has a mushroom-head-shaped connecting element 11 with a tubular recess 12 that is suitable for the passage of fluid, in particular for fuel. The second component 9 also comprises the mating thread 13 that is suitable for screwing the second component 9 onto the thread 8 of the first component 2.

The mushroom-head-shaped connecting element 11 is, for example, hemispherical or in the form of a half ellipse. In this way a particularly high surface pressure in the area of the contact between the mushroom-head-shaped connecting element 11 and the element 6 in the area of the tapered recess 7 is guaranteed with at the same time only a light torque being necessary to screw the mating thread 13 onto the thread 8. In that way it can easily be ensured that the second component 9 is not overstressed.

The sealing material of which the element 6 consists has a hardness that is less than the hardness of the connecting element, in particular of the material of the connecting element that is present in the area of the contact between the connecting element 11 and the element 6. The material of the connecting element 11 is preferably steel. The sealing material is preferably copper or aluminum, whose hardness is less than the hardness of the steel of the element 11. The hardness of a material is normally determined by using a Brinell or Mohs hardness test.

The sealing material is plastically deformed by the high surface pressure in the area of contact with the mushroom-head-shaped connecting element 11. Thus, in conjunction with the mushroom-head-shape of the connecting element, which ensures a very small area of contact to the tapered recess wall of the element 6 and in that way ensures a very high pressure between the two components, an extremely reliable seal is ensured even at a high pressure in the component and in the first and second component 2, 9, for example at high pressure of the fluid flowing through the tubular recesses 4,12.

It has shown to be particularly advantageous if the sealing material is applied to the body 3 by pressing. The advantage of this is that a simple, cheaply available standard component such as a ring can be used as sealing material and this can then be brought into the shape necessary to fill the further cylindrical recess 5 and at the same time form the tapered recess 5. By pressing it may be fairly well fixed to the body 3. As an alternative the element 6 is already shaped in the way as shown in Figure 2 before inserting it into the further cylindrical recess 5 and is then fixed to the body in a different manner, for example by welding, which however has shown to be more expensive. The sealing material can also consist of a metal other than aluminum or copper provided this metal or material has the properties necessary to form the seal.

As a further alternative the tapered recess 7 may be formed directly in the body 3 and may just be covered at least partly by the sealing material.

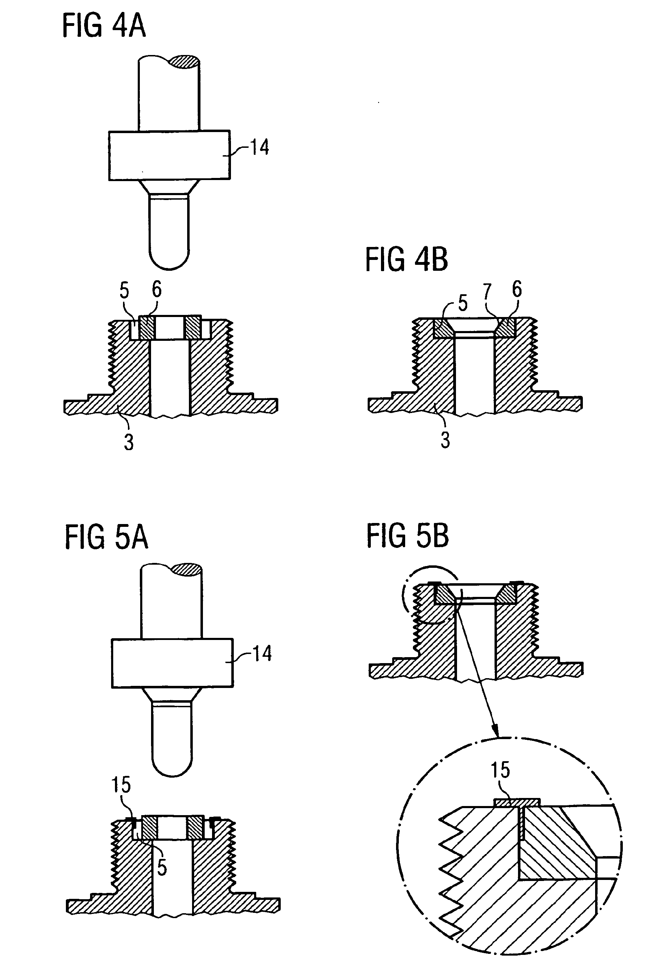

In the following different methods of manufacturing the first component are described. In a first embodiment (Figure 4A, 4B) a more or less ring-shaped element 6 is inserted in the further cylindrical recess 5. It has preferably a smaller diameter than the further recess 5 but projects outwards from the further recess 5 as shown in Figure 4A. A press forming tool 14 is applied to the element 6. By the press forming tool 14 the element 6 is press formed in a way that it fills the outer cylindrical part of the further cylindrical recess 5 and that the tapered recess 7 is formed within the element 6 as shown in Figure 4B. This enables a very cheap production of the first component 2.

In the embodiment of the Figures 5A and 5B a brazing material of a preferably L-ring-shaped form is inserted into the further recess 5 before the press forming process. After the press forming process the first component is heated up to a temperature, that ensures that the brazing material melts. After cooling down again the brazing material has then preferably a T-shaped cross-section as shown in the enlargement of Figure 5B and in that way ensures a very good sealing between the element 6 and the body 3 even under high pressures in the tubular recess 4.

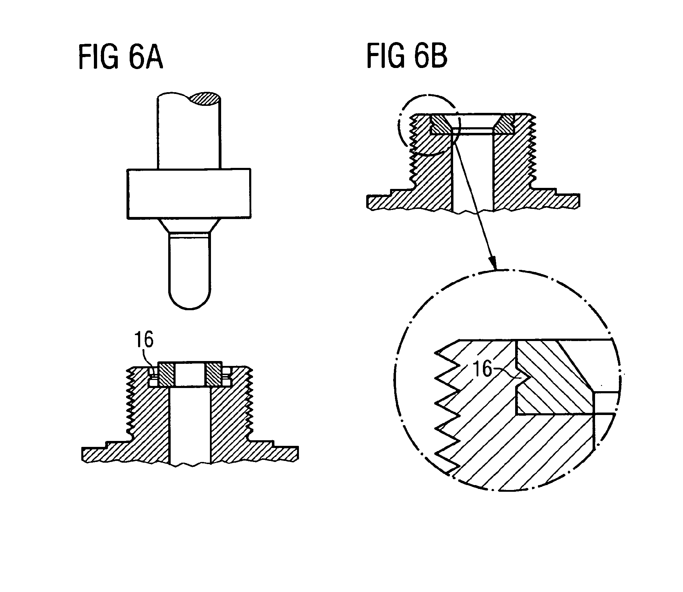

In the embodiment of Figure 6A the further recess 5 is provided with a protuberance 16 or alternatively with a respective cavity. After the press forming manufacturing step a form closure between the element 6 and the body 3 is established in the area of the protuberance as shown in Figure 6B. In that way the element 6 is reliably fixed to the body 3 in an easy and simple way. The different embodiments described may also be combined, for example the first component may comprise the brazing material and the protuberance 16.

## Claims

1. Connecting arrangement for a fuel supply device of an internal combustion engine with a first and second component, with
- the first component (2) comprising a body having a tapered recess (7) at whose narrow end a tubular recess (4) connects,
- the second component (9) having another tubular recess (12), **characterized in that,**
- the second component (9) has a mushroom-head-shaped connecting element (11) with the another tubular recess (12),
- the mushroom-head-shaped connecting element (11) is pressed with its hemispherical or half ellipse contour against the first component (2) in the area of the tapered recess (7) and
- the tapered recess (7) is formed in an element (6) consisting of a sealing material with a cylindrical outer contour, which is fixed to the body (3), the sealing material having a hardness which is less than the hardness of the material of the mushroom-head-shaped connecting element (7) of which the mushroom-head-shaped connecting element consists at least in the area of contact which contacts the sealing material, when the mushroom-head-shaped connecting element (11) is pressed against the first component (2).

2. Connecting arrangement in accordance with claim 1, **characterized in that** the sealing material is pressed against the body (3).

3. Connecting arrangement in accordance with claim 1 or 2, **characterized in that** the element (6) is arranged in a further cylindrical recess (5) of the body (3), to which the tubular recess (4) connects and which has a wider diameter than the tubular recess (4).

4. Connecting arrangement in accordance with claim 3, **characterized in that** the element (6) is brazed to the body (3), with the brazing material (15) being located between the element (6) and the body (3) along at least part of the axial extension of the further recess.

5. Connecting arrangement in accordance with one of the claims 3 or 4, **characterized, in that** the body (3) has a protuberance (16) or a respective cavity, that is formed in a way that in co-operation with the element (6) a form closure between the element (6) and the body (3) is established.

6. Connecting arrangement in accordance with one of the preceding claims, **characterized in that** the sealing material is aluminum or copper.

## Patentansprüche

1. Verbindungsanordnung für eine Kraftstoffversorgungsvorrichtung einer Brennkraftmaschine mit einer ersten und einer zweiten Komponente, während
die erste Komponente (2) einen Körper mit einer sich verjüngenden Aussparung (7) umfasst, an dessen schmalerem Ende eine rohrförmige Aussparung verbindet,
die zweite Komponente (9) weist eine andere rohrförmige Aussparung (12) auf, **dadurch gekennzeichnet, dass**
die zweite Komponente (9) ein pilzkopfförmiges Verbindungselement (11) mit der anderen rohrförmigen Aussparung (12) aufweist, wobei
das pilzkopfförmige Verbindungselement (11) mit seiner halbkugelförmigen oder halbelliptischen Kontur gegen die erste Komponente (2) im Bereich der sich verjüngenden Aussparung (7) gedrückt wird und
die sich verjüngende Aussparung (7) ist ausgebildet in einem Element (6), das aus einem dichtenden Material mit einer zylindrischen äußeren Kontur besteht, das an dem Körper (3) befestigt ist, während das dichtende Material eine Härte aufweist, die niedriger ist als die Härte des Materials des pilzkopfförmigen Verbindungselements (7), aus dem das pilzkopfförmige Verbindungselement mindestens im Kontaktbereich besteht, der das dichtende Material kontaktiert, wenn das pilzkopfförmige Verbindungselement (11) gegen die erste Komponente (2) gedrückt wird.

2. Verbindungsanordnung gemäß Anspruch 1, **dadurch gekennzeichnet, dass** das dichtende Material gegen den Körper (3) gedrückt wird.

3. Verbindungsanordnung gemäß Anspruch 1 oder 2, **dadurch gekennzeichnet, dass** das Element (6) in einer weiteren zylindrischen Aussparung (5) des Körpers (3) angeordnet ist, mit dem die rohrförmige Aussparung (4) verbindet und das einen größeren Durchmesser als die rohrförmige Aussparung (4) aufweist.

4. Verbindungsanordnung gemäß Anspruch 3, **dadurch gekennzeichnet, dass** das Element (6) an den Körper (3) angelötet ist, während das Lötmaterial (15) zwischen dem Element (6) und dem Körper (3) entlang mindestens eines Teils der axialen Ausdehnung der weiteren Aussparung angeordnet ist.

5. Verbindungsanordnung gemäß einem der Ansprüche 3 oder 4, **dadurch gekennzeichnet, dass** der Körper (3) eine Ausstülpung (16) oder eine entsprechende Ausnehmung aufweist, die in einer Weise ausgebildet ist, dass in Zusammenarbeit mit dem Element (6) ein Formschluss zwischen dem Element (6) und dem Körper (3) ausgebildet ist.

6. Verbindungsanordnung gemäß einem der vorhergehenden Ansprüche, **dadurch gekennzeichnet, dass** das dichtende Material Aluminium oder Kupfer ist.

## Revendications

1. Dispositif de raccordement destiné à un dispositif d'alimentation en carburant d'un moteur à combustion interne doté d'un premier et d'un deuxième composant, tel que
- le premier composant (2) comprend un corps comportant un évidement conique (7) à l'extrémité étroite duquel vient se raccorder un évidement tubulaire (4),
- le deuxième composant (9) comporte un autre évidement tubulaire (12), **caractérisé en ce que,**
- le deuxième composant (9) comporte un élément (11) de raccordement en forme de tête de champignon avec l'autre évidement tubulaire (12),
- l'élément (11) de raccordement en forme de tête de champignon est comprimé tandis que son contour hémisphérique ou en demi ellipse épouse le premier composant (2) dans la zone de l'évidement conique (7) et
- l'évidement conique (7) est constitué d'un élément (6) constitué d'un matériau d'étanchéité présentant un contour extérieur cylindrique, qui est fixé au corps (3), le matériau d'étanchéité présentant une dureté inférieure à celle du matériau de l'élément (7) de raccordement en forme de tête de champignon dont est constitué l'élément de raccordement en forme de tête de champignon au moins dans la zone de contact qui vient en contact avec le matériau d'étanchéité, quand l'élément (11) de raccordement en forme de tête de champignon est comprimé contre le premier composant (2).

2. Dispositif de raccordement selon la revendication 1,
**caractérisé en ce que** le matériau d'étanchéité est comprimé contre le corps (3).

3. Dispositif de raccordement selon la revendication 1 ou 2, **caractérisé en ce que** l'élément (6) est disposé dans un évidement cylindrique supplémentaire (5) du corps (3) auquel vient se raccorder l'évidement tubulaire (4), et présentant un diamètre plus important que l'évidement tubulaire (4).

4. Dispositif de raccordement selon la revendication 3,
**caractérisé en ce que** l'élément (6) est brasé au corps (3), le matériau de brasage (15) étant situé entre l'élément (6) et le corps (3) le long d'au moins une partie de l'extension axiale de l'évidement supplémentaire.

5. Dispositif de raccordement selon l'une des revendications 3 ou 4, **caractérisé en ce que** le corps (3) comporte une protubérance (16) ou une cavité respective, formée de manière qu'en coopération avec l'élément (6), il se crée une fermeture de forme entre l'élément (6) et le corps (3).

6. Dispositif de raccordement selon l'une des revendications précédentes, **caractérisé en ce que** le matériau d'étanchéité est de l'aluminium ou du cuivre.
